# EUROPEAN PATENT APPLICATION

(11) **EP 4 333 371 A1**
(43) Date of publication of application: **06.03.2024**
(21) Application number: 23194381.2
(22) Date of filing: 30.08.2023
(51) Int. Cl.: H04L 9/40, H04L 65/70

(54) **GROUP PACKET PROCESSING FOR DISCONTINUOUS RECEPTION COMMUNICATION**

(30) Priority: 31.08.2022 US 202217900190
(71) Applicant: Meta Platforms Technologies, LLC, Menlo Park, CA 94025 (US)
(72) Inventor: WANG, Jiansong, Menlo Park (US); YU, Fang, Menlo Park (US); ZHANG, Xiaodi, Menlo Park (US); LU, Yi, Menlo Park (US); HU, Chunyu, Menlo Park (US); CHAN, Yee Sin, Menlo Park (US)
(74) Representative: Murgitroyd & Company

(57) **Abstract**

Disclosed herein are related to devices and methods for communication. In one aspect, a device includes a first processor and a second processor. The first processor may be configured to generate a first set of packets associated with an application data unit in a first layer corresponding to content data. Each packet of the first set of packets may include a flag indicative of an association with the application data unit. The second processor may be configured to generate a second set of one or more packets in a second layer for transmission, in response to determining that the first set of packets is associated with the application data unit according to flags of the first set of packets. The second processor may be configured to schedule to transmit the second set of one or more packets in the second layer within a defined time period.

## Description

### FIELD OF DISCLOSURE

The present disclosure is generally related to processing packets associated with one or more groups to improve of discontinuous reception.

### BACKGROUND

Discontinuous reception (DRX) allows two or more communication devices to communicate through a wireless communication link in a power efficient manner. For example, wireless interfaces or wireless processors of two communication devices may be enabled for a scheduled time period, and may be disabled or powered off until the subsequent time period for communication. By powering off the wireless interfaces or wireless processors when no data is exchanged, the two communication devices can conserve power/energy.

In some implementations, different components in one or more devices may operate in different OSI layers. For example, a first processor generating content data (e.g., image data) may generate or process data in an application layer or a transport layer, while a second processor for wireless communication may generate or process data in a data link layer or a physical layer. Any timing mismatch of operations of the first processor and the second processor may reduce the efficiency of DRX. For example, the image data from the first processor may not be provided to the second processor within a scheduled time period for transmission. If the image data is not provided within the scheduled time period for transmission, the scheduled time period may be extended to allow transmission of the image data. However, extending the scheduled time period for transmission may reduce power efficiency. Alternatively, the image data can be transmitted during a subsequent scheduled time period for transmission. However, transmitting the image data in the subsequent scheduled time period may cause delay in presenting an image of the image data.

### SUMMARY

Various embodiments disclosed herein are related to a device for communication. In some embodiments, the device includes a first processor and a second processor. In some embodiments, the first processor is configured to generate a first set of packets in a first layer corresponding to content data. The first set of packets may be associated with an application data unit (ADU) or a protocol data unit (PDU) set. In at least some example embodiments disclosed herein, an ADU may be interchangeable or replaced with a PDU set. In some embodiments, an ADU can sometimes be referred to as a PDU set. Each packet of the first set of packets may include a flag indicative of an association with the application data unit. In some embodiments, the second processor is configured to determine that the first set of packets in the first layer is associated with the application data unit, according to flags of the first set of packets. In some embodiments, the second processor is configured to generate, using the first set of packets, a second set of one or more packets in a second layer for transmission, in response to determining that the first set of packets is associated with the application data unit. In some embodiments, the second processor is configured to schedule to transmit the second set of one or more packets in the second layer within a defined time period.

In some embodiments, the second processor is configured to schedule a time period subsequent to the defined time period to cause a wireless interface of the device to enter a sleep state. In some embodiments, the first set of packets in the first layer includes Internet protocol (IP) packets, and the second set of one or more packets in the second layer includes radio link control (RLC) packets, packet data convergence protocol (PDCP) packets, service data adaption protocol (SDAP) packets, or medium access control (MAC) packets.

In some embodiments, a last packet of the first set of packets includes a flag indicating that no additional packet is associated with the application data unit. In some embodiments, each remaining packet of the first set of packets includes a flag indicating that an additional packet is associated with the application data unit. In some embodiments, the second processor is configured to hold off on scheduling transmission of the second set of one or more packets, until detecting the flag of the last packet indicating that no additional packet is associated with the application data unit.

In some embodiments, the first processor is configured to obtain a third set of packets in the first layer corresponding to another content data. The third set of packets may be associated with another application data unit. Each packet of the third set of packets may include a flag indicative of an association with the another application data unit. In some embodiments, the second processor is configured to determine that the third set of packets in the first layer is associated with the another application data unit according to flags of the third set of packets. In some embodiments, the second processor is configured to generate, using the third set of packets, a fourth set of packets in the second layer for transmission, in response to determining that the third set of packets is associated with the another application data unit. In some embodiments, the second processor is configured to schedule to transmit the second set of one or more packets and the fourth set of packets within the defined time period.

In some embodiments, the second processor is configured to determine a predicted time period to transmit the second set of one or more packets in the second layer. In some embodiments, the second processor is configured to compare the predicted time period with a threshold of the defined time period. In some embodiments, the second processor is configured to schedule to transmit the second set of one or more packets within the defined time period, in response to the predicted time period satisfying the threshold. In certain embodiments, in response to the predicted time period not satisfying the threshold, the second processor may extend the defined time period (for the wireless interface to be in an active/on state) to allow transmission of the one or more packets, or may schedule to transmit the one or more packets during a subsequent time period (when the wireless interface is in an active/on state).

Various embodiments disclosed herein are related to a method for communication. In some embodiments, the method includes generating, by at least one processor, a first set of packets in a first layer corresponding to content data. The first set of packets may be associated with an application data unit. Each packet of the first set of packets may include a flag indicative of an association with the application data unit. In some embodiments, the method includes determining, by the at least one processor, that the first set of packets in the first layer is associated with the application data unit, according to flags of the first set of packets. In some embodiments, the method includes generating, by the at least one processor using the first set of packets, a second set of one or more packets in a second layer for transmission, in response to determining that the first set of packets is associated with the application data unit. In some embodiments, the method includes scheduling, by the at least one processor, to transmit the second set of one or more packets in the second layer within a defined time period.

In some embodiments, the method includes scheduling, by the at least one processor, a time period subsequent to the defined time period to cause a wireless interface to enter a sleep state. In some embodiments, the first set of packets in the first layer includes Internet protocol (IP) packets, and the second set of one or more packets in the second layer includes radio link control (RLC) packets, packet data convergence protocol (PDCP) packets, service data adaption protocol (SDAP) packets, or medium access control (MAC) packets.

In some embodiments, a last packet of the first set of packets includes a flag indicating that no additional packet is associated with the application data unit. In some embodiments, each remaining packet of the first set of packets includes a flag indicating that an additional packet is associated with the application data unit.

In some embodiments, the method includes holding off, by the at least one processor, on scheduling transmission of the second set of one or more packets, until detecting the flag of the last packet indicating that no additional packet is associated with the application data unit.

In some embodiments, the method includes obtaining, by the at least one processor, a third set of packets in the first layer corresponding to another content data. The third set of packets may be associated with another application data unit. Each packet of the third set of packets may include a flag indicative of an association with the another application data unit. In some embodiments, the method includes determining, by the at least one processor, that the third set of packets in the first layer is associated with the another application data unit according to flags of the third set of packets. In some embodiments, the method includes generating, by the at least one processor using the third set of packets, a fourth set of packets in the second layer for transmission, in response to determining that the third set of packets is associated with the another application data unit. In some embodiments, the method includes scheduling, by the at least one processor, to transmit the second set of one or more packets and the fourth set of packets within the defined time period.

In some embodiments, the method includes determining, by the at least one processor, a predicted time period to transmit the second set of one or more packets in the second layer. In some embodiments, the method includes comparing, by the at least one processor, the predicted time period with a threshold of the defined time period. In some embodiments, the method includes scheduling, by the at least one processor, to transmit the second set of one or more packets within the defined time period, in response to the predicted time period satisfying the threshold. In certain embodiments, in response to the predicted time period not satisfying the threshold, the at least one processor may extend the defined time period (for the wireless interface to be in an active/on state) to allow transmission of the one or more packets, or may schedule to transmit the one or more packets during a subsequent time period (when the wireless interface is in an active/on state).

Various embodiments disclosed herein are related to a non-transitory computer readable medium storing instructions for communication. In some embodiments, the instructions when executed by the one or more processors cause the one or more processors to generate a first set of packets in a first layer corresponding to content data. The first set of packets may be associated with an application data unit. Each packet of the first set of packets may include a flag indicative of an association with the application data unit. In some embodiments, the instructions when executed by the one or more processors cause the one or more processors to determine that the first set of packets in the first layer is associated with the application data unit, according to flags of the first set of packets. In some embodiments, the instructions when executed by the one or more processors cause the one or more processors to generate, using the first set of packets, a second set of one or more packets in a second layer for transmission, in response to determining that the first set of packets is associated with the application data unit. In some embodiments, the instructions when executed by the one or more processors cause the one or more processors to schedule to transmit the second set of one or more packets in the second layer within a defined time period. The non-transitory computer readable medium thus stores instructions that, when executed by the one or more processors, cause the one or more processors, or where necessary associated systems under the control of the one or more processors, to perform the method for communication as described herein.

In some embodiments, the instructions, when executed by the one or more processors, further cause the one or more processors to schedule a time period subsequent to the defined time period to cause a wireless interface to enter a sleep state. In some embodiments, the first set of packets in the first layer includes Internet protocol (IP) packets, and the second set of one or more packets in the second layer includes radio link control (RLC) packets, packet data convergence protocol (PDCP) packets, service data adaption protocol (SDAP) packets, or medium access control (MAC) packets. In some embodiments, a last packet of the first set of packets includes a flag indicating that no additional packet is associated with the application data unit.

In embodiments, the device for communication disclosed herein is a device for performing the method for communication disclosed herein, and the non-transitory computer readable medium disclosed herein stores instructions for one or more processors to perform the method for communication disclosed herein. Preferred features of the embodiments of the device for communication disclosed herein, the method for communication disclosed herein, and the non-transitory computer readable medium disclosed herein will in consequence be understood to apply interchangeably as between these embodiments.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of a system environment including an artificial reality system, according to an example implementation of the present disclosure.
FIG. 2 is a diagram of a head wearable display, according to an example implementation of the present disclosure.
FIG. 3 is a timing diagram of remotely presenting an artificial reality conforming to discontinuous reception communication, according to an example implementation of the present disclosure.
FIG. 4 is a timing diagram showing multiple packets transmitted in groups to support discontinuous reception communication, according to an example implementation of the present disclosure.
FIG. 5 is an example frame of a packet, according to an example implementation of the present disclosure.
FIG. 6 is an example frame of a packet, according to an example implementation of the present disclosure.
FIG. 7 are example packets generated for transmission, according to an example implementation of the present disclosure.
FIG. 8 is a flow diagram showing a process of transmitting multiple packets associated with one or more groups conforming to discontinuous reception communication, according to an example implementation of the present disclosure.
FIG. 9 is a block diagram of a computing environment according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

Disclosed herein are systems devices and methods related to processing a set of packets associated with a group or a unit to support discontinuous reception (DRX) communication. In one aspect, a device includes a first processor (e.g., a host processor, CPU, GPU) operating in a first OSI layer and a second processor (e.g., a wireless processor/interface/chip) operating in a second OSI layer at a constant rate. A layer or OSI layer may refer to and/or include an open systems interconnection layer, and/or a layer of a processing/protocol stack. For example, the first OSI layer may be an application layer or a transport layer. For example, the second OSI layer may be a data link layer or a physical layer. In some embodiments, the first processor generates a first set of packets associated with a group (e.g., application data unit) in a first OSI layer, and implements flags to indicate the association between the first set of packets and the group. The second processor may detect or determine the association between the first set of packets and the group, and can generate a second set of packets associated with the group in a second OSI layer. The second processor may transmit the second set of packets or cause the second set of packets to be transmitted. In some embodiments, the first processor may generate the first set of packets in the first OSI layer at a dynamically changing rate, where the second processor may be periodically enabled or disabled for communication according to DRX.

Advantageously, the disclosed devices and methods can help improve efficiency for remotely presenting artificial reality or extended reality (XR), such as a virtual reality (VR), an augmented reality (AR), or a mixed reality (MR), to a user. In one illustrative implementation, an image of a virtual object is generated by a console communicatively coupled to a head wearable display (HWD). In one example, the HWD can detect a location and/or orientation of the HWD, and transmit the detected location and/or orientation of the HWD to the console through a wireless communication link. The console can determine a user's view of the space of the artificial reality according to the detected location and/or orientation of the HWD, and generate image data indicating an image of the space of the artificial reality corresponding to the user's view. The console can transmit the image data to the HWD, by which the image of the space of the artificial reality corresponding to the user's view can be presented to the user. In one aspect, the process of detecting the location of the HWD and the gaze direction of the user wearing the HWD, and presenting the image to the user should be performed within a frame time (e.g., 11 ms or 16 ms). Any latency between a movement of the user wearing the HWD and an image displayed corresponding to the user movement can cause judder, which may result in motion sickness and can degrade the user experience. Because the user may move erratically/unpredictably/spontaneously, packets of the image data of a view within the artificial reality can be generated at dynamically varying rates. Meanwhile, the console and the HWD may periodically enter an active state and a sleep state to communicate with each other according to DRX to reduce power consumption. In one aspect, the console transmits a set of packets associated with a group (or application data unit) corresponding to content (e.g., image) or a portion of the content (e.g., portion of the image) to present, e.g., to a user. After transmitting the set of packets, the console may enter a sleep state to reduce power consumption. If the console transmits available packets for transmission irrespective of content or a portion of content to present, the HWD may have to wait until sufficient packets are received to present the content (e.g., image) or a portion of the content (e.g., portion of the image). For example, the HWD may wait until the subsequent active state for the console to transmit missing packets for presenting the content (e.g., image) or a portion of the content (e.g., portion of the image). By ensuring that a set of packets associated with a group (or application data unit) corresponding to content (e.g., image) or a portion of the content (e.g., portion of the image) to present is transmitted together, the HWD may present the content (e.g., image) or a portion of the content (e.g., portion of the image) with a low latency and can provide a seamless experience to the user.

Although various embodiments of communication for artificial reality are provided, the general principles of processing a set of packets associated with one or more groups (e.g., application data units) can be applied to communication for other (types of) applications or other (types of) data.

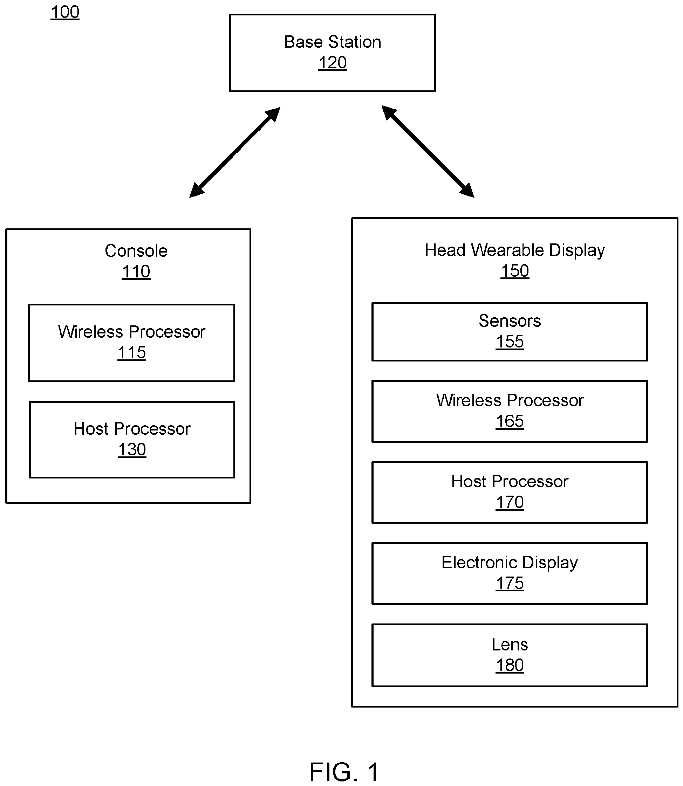

FIG. 1 is a block diagram of an example artificial reality system environment 100. In some embodiments, the artificial reality system environment 100 includes a HWD 150 worn by a user, a console 110 providing content of artificial reality to the HWD 150, and a base station 120. In one aspect, the HWD 150 and the console 110 may communicate with each other through a wireless communication link via the base station 120. The wireless communication link may be a cellular communication link conforming to 3G, 4G, 5G, 6G or any cellular communication link. In some embodiments, the artificial reality system environment 100 includes more, fewer, or different components than shown in FIG. 1. In some embodiments, functionality of one or more components of the artificial reality system environment 100 can be distributed among the components in a different manner than is described here. For example, some of the functionality of the console 110 may be performed by the HWD 150. For example, some of the functionality of the HWD 150 may be performed by the console 110.

In one aspect, the HWD 150 and the console 110 can operate together to present artificial reality to a user of the HWD 150. In one example, The HWD 150 may detect its location and/or orientation of the HWD 150 as well as a shape, location, and/or an orientation of the body/hand/face of the user, and provide the detected location/or orientation of the HWD 150 and/or tracking information indicating the shape, location, and/or orientation of the body/hand/face to the console 110 through a wireless link via the base station 120. The console 110 may generate image data indicating an image of the artificial reality according to the detected location and/or orientation of the HWD 150, the detected shape, location and/or orientation of the body/hand/face of the user, and/or a user input for the artificial reality, and transmit the image data to the HWD 150 through a wireless link via the base station 120 for presentation.

In some embodiments, the HWD 150 is an electronic component that can be worn by a user and can present or provide an artificial reality experience to the user. The HWD 150 may be referred to as, include, or be part of a head mounted display (HMD), head mounted device (HMD), head wearable device (HWD), head worn display (HWD) or head worn device (HWD). The HWD 150 may present one or more images, video, audio, or some combination thereof to provide the artificial reality experience to the user. In some embodiments, audio is presented via an external device (e.g., speakers and/or headphones) that receives audio information from the HWD 150, the console 110, or both, and presents audio based on the audio information. In some embodiments, the HWD 150 includes sensors 155, a wireless processor 165 (also referred to as "a wireless interface 165"), a host processor 170, an electronic display 175, and a lens 180. These components may operate together to detect a location of the HWD 150 and a gaze direction of the user wearing the HWD 150, and present an image of a view within the artificial reality corresponding to the detected location and/or orientation of the HWD 150. In other embodiments, the HWD 150 includes more, fewer, or different components than shown in FIG. 1.

In some embodiments, the sensors 155 include electronic components or a combination of electronic components and software components that detect a location and an orientation of the HWD 150. Examples of the sensors 155 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 155 detect the translational movement and the rotational movement, and determine an orientation and location of the HWD 150. In one aspect, the sensors 155 can detect the translational movement and the rotational movement with respect to a previous orientation and location of the HWD 150, and determine a new orientation and/or location of the HWD 150 by accumulating or integrating the detected translational movement and/or the rotational movement. Assuming for an example that the HWD 150 is oriented in a direction 25 degrees from a reference direction, in response to detecting that the HWD 150 has rotated 20 degrees, the sensors 155 may determine that the HWD 150 now faces or is oriented in a direction 45 degrees from the reference direction. Assuming for another example that the HWD 150 was located two feet away from a reference point in a first direction, in response to detecting that the HWD 150 has moved three feet in a second direction, the sensors 155 may determine that the HWD 150 is now located at a vector multiplication of the two feet in the first direction and the three feet in the second direction.

In some embodiments, the wireless processor 165 includes an electronic component or a combination of an electronic component and a software component that communicates with the console 110 through a wireless communication link via the base station 120. Examples of the wireless communication link can include 3G, 4G, 5G, 6G, or any cellular communication link. In some embodiments, the wireless processor 165 includes or is embodied as a transceiver or a communication modem coupled to the transceiver for transmitting and receiving data through the wireless communication link. Through the wireless communication link via the base station 120, the wireless processor 165 may transmit to the console 110 data indicating the determined location and/or orientation of the HWD 150, the determined gaze direction of the user, and/or hand tracking measurement. Moreover, through the wireless communication link via the base station 120, the wireless processor 165 may receive from the console 110 image data indicating or corresponding to an image to be presented.

In some embodiments, the host processor 170 includes an electronic component or a combination of an electronic component and a software component that generates one or more images for display, for example, according to a change in view of the space of the artificial reality. In some embodiments, the host processor 170 is implemented as a processor (or a graphical processing unit (GPU)) that executes instructions to perform various functions described herein. The host processor 170 may receive, through the wireless processor 165, image data describing an image of artificial reality to be presented, and present the image through the electronic display 175. In some embodiments, the image data from the console 110 may be encoded, and the host processor 170 may decode the image data to present the image. In some embodiments, the host processor 170 receives, from the console 110, object information indicating virtual objects in the artificial reality space and depth information indicating depth (or distances from the HWD 150) of the virtual objects. In one aspect, according to the image of the artificial reality, object information, depth information from the console 110, and/or updated sensor measurements from the sensors 155, the host processor 170 may perform shading, reprojection, and/or blending to update the image of the artificial reality to correspond to the updated location and/or orientation of the HWD 150.

In some embodiments, the electronic display 175 is an electronic component that displays an image. The electronic display 175 may, for example, be a liquid crystal display or an organic light emitting diode display. The electronic display 175 may be a transparent display that allows the user to see through. In some embodiments, when the HWD 150 is worn by a user, the electronic display 175 is located proximate (e.g., less than 3 inches) to the user's eyes. In one aspect, the electronic display 175 emits or projects light towards the user's eyes according to image generated by the host processor 170.

In some embodiments, the lens 180 is a mechanical component that alters received light from the electronic display 175. The lens 180 may magnify the light from the electronic display 175, and correct for optical error associated with the light. The lens 180 may be a Fresnel lens, a convex lens, a concave lens, a filter, or any suitable optical component that alters the light from the electronic display 175. Through the lens 180, light from the electronic display 175 can reach the pupils, such that the user can see the image displayed by the electronic display 175, despite the close proximity of the electronic display 175 to the eyes.

In some embodiments, the host processor 170 performs compensation to compensate for any distortions or aberrations. In one aspect, the lens 180 introduces optical aberrations such as a chromatic aberration, a pin-cushion distortion, barrel distortion, etc. The host processor 170 may determine a compensation (e.g., predistortion) to apply to the image to be presented to compensate for the distortions caused by the lens 180, and apply the determined compensation to the image to be presented. The host processor 170 may provide the predistorted image to the electronic display 175.

In some embodiments, the console 110 is an electronic component or a combination of an electronic component and a software component that provides content to be presented to the HWD 150. In one aspect, the console 110 includes a wireless processor 115 (also referred to as "a wireless interface 115") and a host processor 130. These components may operate together to determine a view (e.g., a FOV of the user) of the artificial reality corresponding to the location of the HWD 150 and the gaze direction of the user of the HWD 150, and can generate image data indicating an image of the artificial reality corresponding to the determined view. The console 110 may provide the image data to the HWD 150 for presentation of the artificial reality. In other embodiments, the console 110 includes more, fewer, or different components than shown in FIG. 1.

In some embodiments, the wireless processor 115 is an electronic component or a combination of an electronic component and a software component that communicates with the HWD 150. In some embodiments, the wireless processor 115 includes or is embodied as a transceiver or a communication modem coupled to the transceiver for transmitting and receiving data through a wireless communication link via the base station 120. The wireless processor 115 may be a counterpart component to the wireless processor 165. Through the wireless communication link via the base station 120, the wireless processor 115 may receive from the HWD 150 data indicating the determined location and/or orientation of the HWD 150, the determined gaze direction of the user, and/or other sensor measurement data (e.g., the hand tracking measurement). Moreover, through the communication link via the base station 120, the wireless processor 115 may transmit to the HWD 150 image data describing an image to be presented.

The host processor 130 can include or correspond to a component that generates content to be presented according to the location and/or orientation of the HWD 150. In some embodiments, the host processor 130 includes or is embodied as one or more central processing units, graphics processing units, image processors, or any processors for generating images of the artificial reality. In some embodiments, the host processor 130 may incorporate the gaze direction of the user of the HWD 150 and a user interaction in the artificial reality to generate the content to be presented. In one aspect, the host processor 130 determines a view of the artificial reality according to the location and/or orientation of the HWD 150. For example, the host processor 130 maps the location of the HWD 150 in a physical space to a location within an artificial reality space, and determines a view of the artificial reality space along a direction corresponding to the mapped orientation from the mapped location in the artificial reality space. The host processor 130 may generate image data describing an image of the determined view of the artificial reality space, and provide the image data to the wireless processor 115 for transmission to the HWD 150. The host processor 130 may encode the image data describing the image, and can provide the encoded data to the wireless processor 115 for transmission to the HWD 150.

In some embodiments, the base station 120 may be a device configured to provide a wireless communication to one or more consoles 110 and/or HWDs 150, or other communication devices within a geographical boundary. Examples of the base station 120 include eNB, gNB, etc. The base station 120 may be communicatively coupled to another base station 120 or other communication devices through a wireless communication link and/or a wired communication link. In one example, the base station 120 may receive data from the console 110 or from another base station, and forward the data to the HWD 150 or any communication device within the geographical boundary through a wireless communication link. In one example, the base station 120 may receive data from the HWD 150 or from another base station, and forward the data to the console 110 or any communication device within the geographical boundary through a wireless communication link. Hence, the base station 120 allows communication among the console 110, the HWD 150 or other communication devices. In one aspect, the base station 120 may schedule communication among the console 110, the HWD 150, or other communication devices to avoid collision or interference. For example, the console 110, the HWD 150, or a communication device may transmit data to the base station 120 during a scheduled time period or an uplink configuration grant (UL CG).

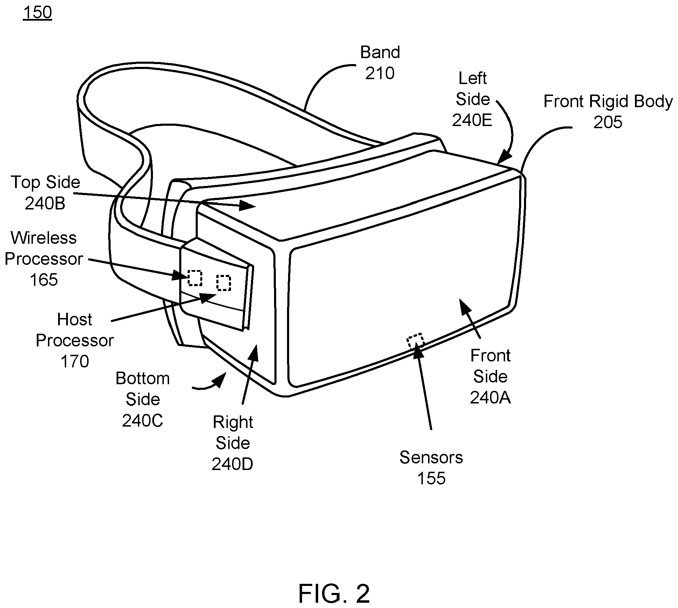

FIG. 2 is a diagram of a HWD 150, in accordance with an example embodiment. In some embodiments, the HWD 150 includes a front rigid body 205 and a band 210. The front rigid body 205 includes the electronic display 175 (not shown in FIG. 2), the lens 180 (not shown in FIG. 2), the sensors 155, the wireless processor 165, and the host processor 170. In the embodiment shown by FIG. 2, the wireless processor 165, the host processor 170, and the sensors 155 are located within the front rigid body 205, and may not visible to the user. In other embodiments, the HWD 150 has a different configuration than shown in FIG. 2. For example, the wireless processor 165, the host processor 170, and/or the sensors 155 may be in different locations than shown in FIG. 2.

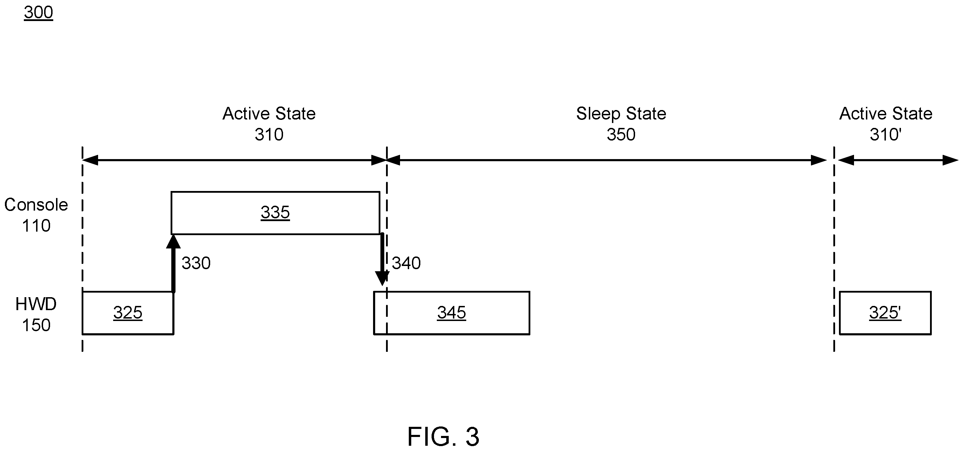

FIG. 3 is a timing diagram 300 of remotely presenting an artificial reality or an extended reality (XR), according to an example implementation of the present disclosure. In some embodiments, the console 110 and the HWD 150 can communicate with each other directly or indirectly via the base station 120, according to DRX. In some implementations, the base station 120 may relay or forward communication generated between the console 110 and the HWD 150, or communication destined for one or both of these devices. In one aspect, the console 110 and the HWD 150 can periodically transition between an active state 310 and a sleep state 350 in a synchronous manner to achieve power efficiency. In the active state 310 (e.., wake up state), the console 110 and the HWD 150 may maintain a communication session to exchange data for presenting artificial reality. In the sleep state 350 (e.g., low power or inactive state), the console 110 and the HWD 150 may stop or disable wireless processors 115, 165. In one aspect, the console 110 and the HWD 150 operating in the active state 310 can consume more power than the console 110 and the HWD 150 operating in the sleep state 350. By operating the console 110 and the HWD 150 in the sleep state 350 when communication between the console 110 and the HWD 150 is not needed, power consumption of the console 110 and the HWD 150 can be reduced.

In the active state 310, the console 110 and the HWD 150 may power on or enable the wireless processors 115, 165. During a time period 325 in the active state 310, the HWD 150 may transmit sensor measurements 330 indicating a location and/or orientation of the HWD 150 to the console 110 via the base station 120. During a time period 335 in the active state 310, the console 110 may receive the sensor measurements 330, and can generate image data of a view of an artificial reality according to (e.g., responsive to, or using) the sensor measurements 330. For example, the console 110 may map/associate/relate the location of the HWD 150 in a physical space to a location within the artificial reality space, and can determine a view of the artificial reality space along a direction corresponding to the mapped orientation from the mapped location in the artificial reality space. The console 110 may also generate the image data describing or indicating the determined view of the artificial reality space. The console 110 may transmit the image data 340 of the view of the artificial reality to the HWD 150 directly and/or via the base station 120. The HWD 150 may receive the image data during the active state 310.

In one aspect, in response to completing communication of the image data 340, the console 110 and the HWD 150 may enter the sleep state 350. In the sleep state 350, the console 110 and the HWD 150 may power off, enter low power operating mode, and/or disable wireless processors 115, 165 (or wireless interfaces 115, 165). While in the sleep state, the HWD 150 may present an image of the image data 340 through a display. In one aspect, the console 110 and the HWD 150 operating in the sleep state 350 may consume less power than in the active state 310. The console 110 and the HWD 150 may operate in the sleep state 350 until a scheduled time for the next active state 310'.

In a subsequent active state 310', the HWD 150 may repeat the process for the subsequent frame. For example, the HWD 150 may transmit sensor measurements 330 indicating an updated location and/or orientation of the HWD 150 to the console 110, e.g., directly or via the base station 120. The console 110 may receive the sensor measurements 330, and can generate image data of a view of an artificial reality according to the sensor measurements 330. The console 110 may transmit the image data 340 of the view of the artificial reality to the HWD 150, e.g., directly or via the base station 120. In one aspect, a difference between i) a first time, at which the active state 310 begins and ii) a second time, at which the active state 310' begins may be a frame time for presenting an artificial reality. For example, the frame time may be 11 ms or 16 ms. By periodically switching between operating in the active state 310 and operating in the sleep state 350, the HWD 150 and the console 110 can reduce power consumption.

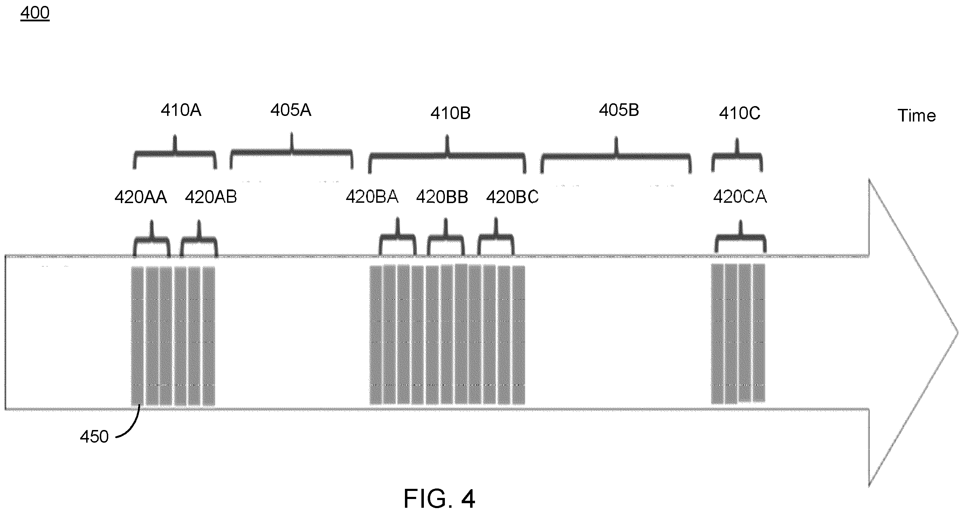

FIG. 4 is a timing diagram 400 showing multiple packets 450 transmitted in groups to support discontinuous reception communication, according to an example implementation of the present disclosure. In some embodiments, the console 110 generates and/or transmits the packets 450 to the HWD 150. In some embodiments, other devices (e.g., HWD 150 or other communication device) may generate and/or transmit the packets 450.

In some embodiments, the console 110 transmits packets 450 to the HWD 150, directly or via the base station 120. For example, the console 110 may periodically switch between operating in an active state and a sleep state. For example, the console 110 may operate in the active state during time periods 410A, 410B, 410C to transmit packets, and can operate in the sleep state during time periods 405A, 405B to reduce power consumption. In one aspect, the console 110 transmits packets 450 associated with one or more groups or one or more application data units. An application data unit may be a set of packets sufficient to represent content (e.g., image) or a portion of content (e.g., a portion of image). The HWD 150 may receive the set of packets associated with an application unit, and can render/present content or a portion of the content, according to the received set of packets.

During the time period 410A, the console 110 and the HWD 150 may operate in an active state by enabling the wireless processors 115, 165 for wireless communication. During the time period 410A, the console 110 may transmit a set of packets 450 associated with an application data unit 420AA, and a set of packets 450 associated with an application data unit 420AB, directly or via the base station 120. During the time period 410A, the HWD 150 may receive the set of packets 450 associated with the application data unit 420AA and the set of packets 450 associated with the application data unit 420AB.

During the time period 405A, the console 110 and the HWD 150 may operate in a sleep state by disabling wireless processors 115, 165 to reduce power consumption. In one approach, the HWD 150 may present an image or a portion of the image corresponding to the set of packets 450 associated with the application data unit 420AA and the set of packets 450 associated with the application data unit 420AB.

During the time period 410B, the console 110 and the HWD 150 may operate in the active state by enabling the wireless processors 115, 165 for wireless communication. During the time period 410B, the console 110 may transmit a set of packets 450 associated with an application data unit 420BA, a set of packets 450 associated with an application data unit 420BB, and a set of packets 450 associated with an application data unit via the base station 120.

During the time period 410B, the HWD 150 may receive the set of packets 450 associated with the application data unit 420BA, the set of packets 450 associated with the application data unit 420BB, and the set of packets 450 associated with the application data unit 420BC. The console 110 may generate and/or transmit more packets during the time period 410B than during the time period 410A, according to more user interaction or movement in the artificial reality application.

During the time period 405B, the console 110 and the HWD 150 may operate in the sleep state by disabling the wireless processors 115, 165 to reduce power consumption. In one approach, the HWD 150 may present an image or a portion of the image corresponding to the set of packets 450 associated with the application data unit 420BA, the set of packets 450 associated with the application data unit 420BB, and the set of packets 450 associated with the application data unit 420BC.

During the time period 410C, the console 110 and the HWD 150 may operate in the active state by enabling the wireless processors 115, 165 for wireless communication. During the time period 410C, the console 110 may transmit a set of packets 450 associated with an application data unit 420CA via the base station 120. During the time period 410C, the HWD 150 may receive the set of packets 450 associated with the application data unit 420CA. The console 110 may generate and transmit less packets during the time period 410C than during the time periods 410A, 410B, according to less user interaction or movement in the artificial reality application.

In one aspect, the console 110 generates and transmits packets for one or more application data units for presenting content (e.g., image) or a portion of the image (e.g., portion of the image). If the console 110 transmits available packets for transmission irrespective of content or a portion of content to present, the HWD 150 may have to wait until sufficient packets are received to render/present the content (e.g., image) or a portion of the content (e.g., portion of the image). For example, the HWD 150 may wait until the subsequent active state for the console 110 to transmit missing packets for rendering/presenting the content (e.g., image) or a portion of the content (e.g., portion of the image). By ensuring that a set of packets associated with a group (or application data unit) corresponding to content (e.g., image) or a portion of the content (e.g., portion of the image) to present is transmitted together during a time period 410 for an active state, the HWD 150 may present the content (e.g., image) or a portion of the content (e.g., portion of the image) with a low latency and can provide a seamless experience to the user.

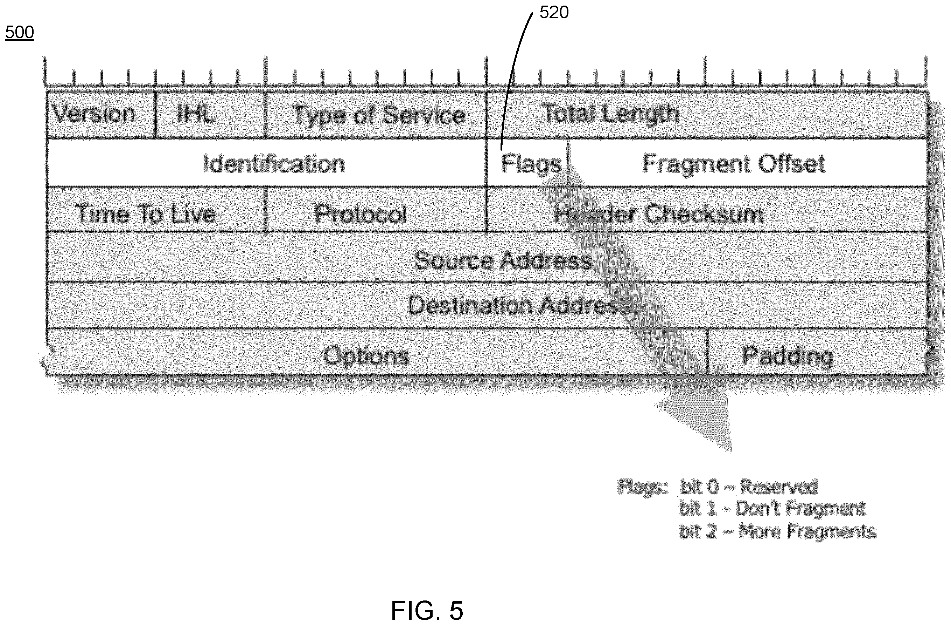

FIG. 5 is an example frame 500 of a packet, according to an example implementation of the present disclosure. The frame 500 may be an IPv4 or other type of frame. In some embodiments, the frame 500 may be generated by a first processor (e.g., host processor 130 or host processor 170). In some embodiments, the frame 500 includes flags field 520 indicating an association of a packet or the frame 500 with a group or an application data unit. For example, a value `bit 1' of the flags field 520 may indicate that a subsequent packet associated with the same application data unit of the packet (or the frame 500) is to follow. For example, a value `bit 2' of the flags field 520 may indicate that no additional packet associated with the application data unit of the packet (or the frame 500) shall follow. A value '0' may be reserved. Accordingly, a second processor (e.g., wireless processor 115 or wireless processor 165) may receive a packet of an application data unit, and can determine whether an additional packet associated with the same application data unit exists or not, according to the flags field 520. The second processor may determine or identify a set of packets associated with the same application data unit, and may transmit or cause the set of packets to be transmitted together.

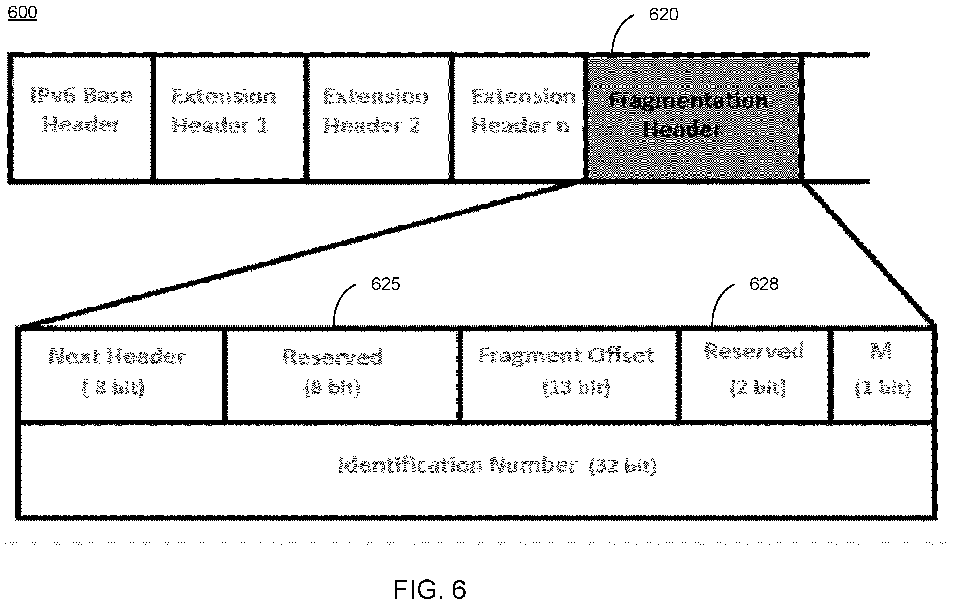

FIG. 6 is an example frame 600 of a packet, according to an example implementation of the present disclosure. The frame 600 may be an IPv6 or other type of frame. In some embodiments, the frame 600 may be generated by a first processor (e.g., host processor 130 or host processor 170). In some embodiments, the frame 600 includes a fragmentation header field 620 indicating an association of a packet or the frame 600 with a group or an application data unit. For example, the fragmentation header field 620 may include a reserved field 625 or a reserved field 628, which can be implemented to indicate an association of a packet with a group or an application data unit. For example, the reserved field 625 or the reserved field 628 can be implemented to indicate whether a subsequent packet associated with the same application data unit of the packet (or the frame 600) will follow. Accordingly, a second processor (e.g., wireless processor 115 or wireless processor 165) may receive a packet of an application data unit, and can determine whether an additional packet associated with the same application data unit exists or not, according to the fragmentation header field 620. The second processor may determine or identify a set of packets associated with the same application data unit, and may transmit or cause the set of packets to be transmitted together.

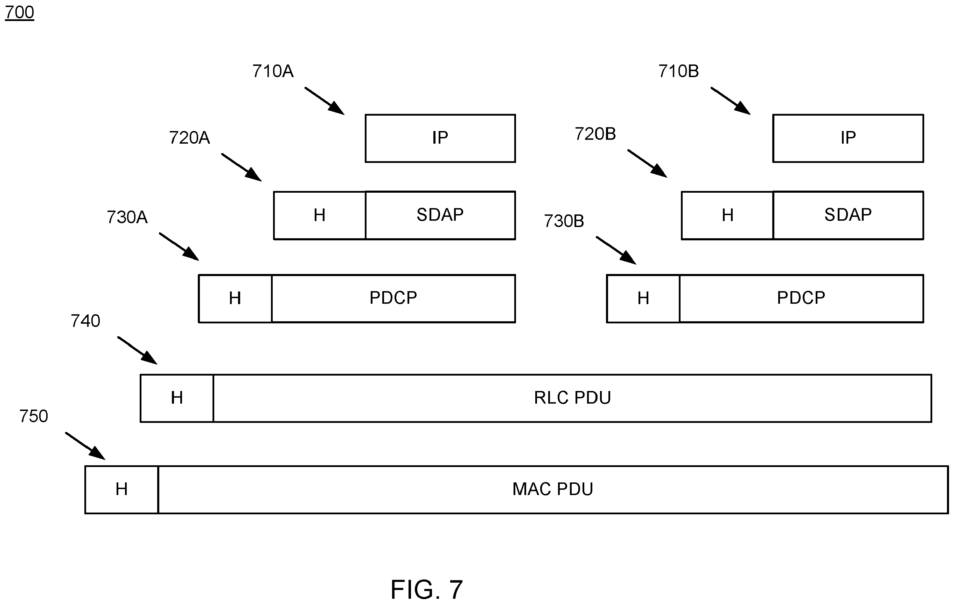

FIG. 7 are example packets 700 generated or transmission, according to an example implementation of the present disclosure. In some embodiments, the packets 700 include packets 710A, 710B, 720A, 720B, 730A, 730B, 740, 750. In some embodiments, the packets 710A, 710B, 720A, 720B, 730A, 730B, 740, 750 are associated with the same application data unit to present content (e.g., image) or a portion of the content (e.g., portion of the image). In some embodiments, the console 110 generates the packets 700 for transmission to the HWD 150 directly or via the base station 120.

In some embodiments, the host processor 130 generates packets 710A, 710B associated with an application data unit. The packets 710A, 710B can include data for presenting content (e.g., image) or a portion of the content (e.g., a portion of the image). In one aspect, the packets 710A, 710B may be packets in an internet protocol layer. In some embodiments, the packets 710A, 710B may include frame 500 or frame 600, and may have flags to indicate an association with the application data unit. For example, the packet 710A may include a flag indicating that a subsequent packet (or packet 710B) associated with the same application data unit is to follow. For example, the packet 710B may include a flag indicating that no subsequent packet associated with the same application data unit shall follow.

In some embodiments, the wireless processor 115 generates packets 720A, 720B, according to the packets 710A, 710B. The wireless processor 115 may determine that the packets 710A, 710B are associated with the same application data unit, and may generate packets 720A, 720B in a lower OSI layer than the packets 710A, 710B. For example, the packets 720A, 720B may be service data adaption protocol (SDAP) packets.

In some embodiments, the wireless processor 115 generates packets 730A, 730B corresponding to the packets 720A, 720B. The packets 730A, 730B may be in a lower OSI layer than the packets 720A, 720B. For example, the packets 730A, 730B may be packet data convergence protocol packet data convergence protocol (PDCP) packets.

In some embodiments, the wireless processor 115 generates a packet 740, according to the packets 730A, 730B. In one approach, the wireless processor 115 combines the packets 730A, 730B into the single packet 740. The packet 740 may be in a lower OSI layer than the packets 730A, 730B. For example, the packet 740 may be a radio link control packet data unit (RLC PDU) packet.

In some embodiments, the wireless processor 115 generates a packet 750, according to the packet 740. The packet 750 may be in a lower OSI layer than the packet 740 for transmission. For example, the packet 750 may be a medium access control packet data unit (MAC PDU) packet. The wireless processor 115 may generate the packet 750, and can schedule the packet 750 for transmission. For example, the wireless processor 115 may determine a predicted time period to transmit the packet 750, and can compare the predicted time period with a threshold of the defined time period (e.g., end time of the active state or a start time of a sleep state). The wireless processor 115 may schedule to transmit the packet 750 within the defined time period, in response to the predicted time period satisfying the threshold. For example, the wireless processor 115 may associate the packet 750 with a UL CG, and may transmit the packet 750 at an allocated time of the UL CGto the HWD 150, directly (e.g., via peer-to-peer communications) or via the base station 120. In response to the predicted time period not satisfying the threshold, the wireless processor 115 may extend the time period for the active state to allow transmission of the packet 750 or may schedule to transmit the packet 750 during a time period for a subsequent active state. Accordingly, the packets 710A, 710B associated with the application data unit for presenting content (e.g., image) or a portion of content (e.g., portion of image) can be transmitted together.

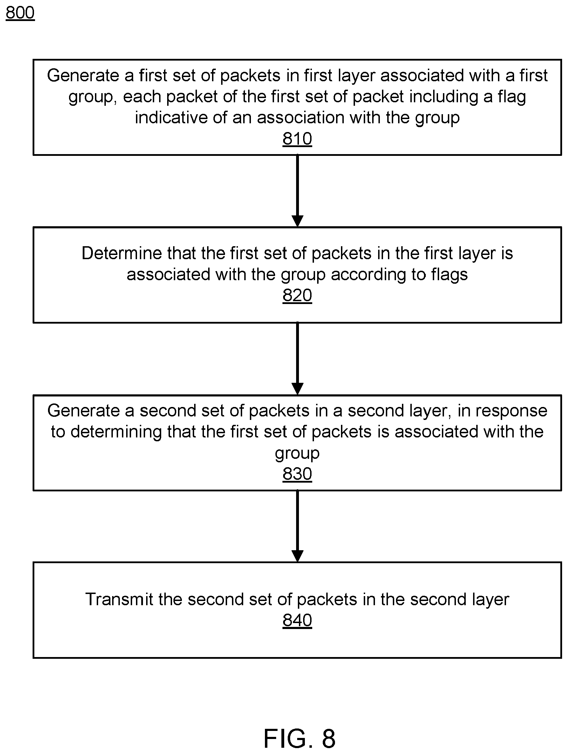

FIG. 8 is a flow diagram showing a process 800 of transmitting multiple packets associated with one or more groups conforming to discontinuous reception communication, according to an example implementation of the present disclosure. In some embodiments, the process 800 is performed by the console 110. In some embodiments, the process 800 is performed by other entities (e.g., HWD 150 or other communication device). In some embodiments, the process 800 includes more, fewer, or different steps than shown in FIG. 8.

In some embodiments, the console 110 generates 810 a first set of packets in first layer for a first group. The first layer may an IP layer. The first set of packets may be associated with an application data unit for presenting content (e.g., image) or a portion of the content (e.g., a portion of the image). In one aspect, the host processor 130 of the console 110 generates the first set of packets including flags to indicate an association with the group or the application data unit. For example, a flag may indicate whether a subsequent packet associated with the same application data unit is to follow. For example, a flag of a last packet of the first set of packets may include a flag indicating that no subsequent packet associated with the same application data unit shall follow.

In some embodiments, the console 110 determines 820 that the first set of packets in the first layer is associated with the group according to flags. For example, the wireless processor 115 receives the first set of packets from the host processor 130, and determines that the first set of packets are associated with the application data unit, according to flags of the first set of packets.

In some embodiments, the console 110 generates 830 a second set of packets in a second layer, in response to determining that the first set of packets is associated with the group. The second layer may be a lower OSI layer than the first layer. For example, the wireless processor 115 generates RLC packets, PDCP packets, SDAP packets, and/or MAC packets as the second set of packets corresponding to the first set of packets (e.g., IP packets).

In some embodiments, the console 110 transmits 840 the second set of packets in the second layer. In one approach, the wireless processor 115 may schedule to transmit the second set within a defined time period for the activate state. For example, the wireless processor 115 may determine a predicted time period to transmit the second set of packets, and can compare the predicted time period with a threshold of the defined time period (e.g., end time of the active state and/or a start time of a sleep state). The wireless processor 115 may schedule to transmit the second set of packets within the defined time period, in response to the predicted time period satisfying the threshold. For example, the wireless processor 115 may associate the second set of packets with a UL CG, and may transmit the second set of packets at an allocated time of the UL CG to the HWD 150 via the base station 120. In response to the predicted time period not satisfying the threshold, the wireless processor 115 may extend the time period for the active state to allow transmission of the second set of packets or can schedule to transmit the second set of packets during a time period for a subsequent active state. Accordingly, packets associated with the application data unit for presenting content (e.g., image) or a portion of content (e.g., portion of image) can be transmitted together.

Advantageously, the console 110 can generate and transmit packets for one or more application data units for presenting content (e.g., image) or a portion of the image (e.g., portion of the image). If the console 110 transmits available packets for transmission irrespective of content or a portion of content to present, the HWD 150 may have to wait until sufficient packets (e.g., related or to be grouped together for rendering/display) are received to present the content (e.g., image) or a portion of the content (e.g., portion of the image). For example, the HWD 150 may wait until the subsequent active state for the console 110 to transmit missing packets for presenting the content (e.g., image) or a portion of the content (e.g., portion of the image). By ensuring that a set of packets associated with a group (or application data unit) corresponding to content (e.g., image) or a portion of the content (e.g., portion of the image) to present is transmitted together during a time period for an active state, the HWD 150 may present the content (e.g., image) or a portion of the content (e.g., portion of the image) with a low latency and can thus provide a seamless experience to the user.

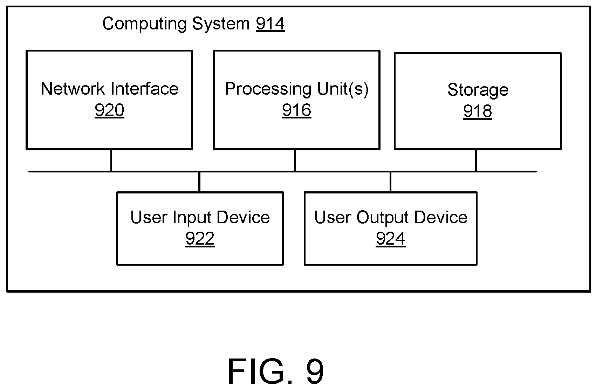

Various operations described herein can be implemented on computer systems. FIG. 9 shows a block diagram of a representative computing system 914 usable to implement the present disclosure. In some embodiments, the console 110, the HWD 150 or both of FIG. 1 are implemented by the computing system 914. Computing system 914 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 914 can be implemented to provide VR, AR, MR experience. In some embodiments, the computing system 914 can include conventional computer components such as processors 916, storage device 918, network interface 920, user input device 922, and user output device 924.

Network interface 920 can provide a connection to a wide area network (e.g., the Internet) to which WAN interface of a remote server system is also connected. Network interface 920 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

User input device 922 can include any device (or devices) via which a user can provide signals to computing system 914; computing system 914 can interpret the signals as indicative of particular user requests or information. User input device 922 can include any or all of a keyboard, touch pad, touch screen, mouse or other pointing device, scroll wheel, click wheel, dial, button, switch, keypad, microphone, sensors (e.g., a motion sensor, etc.), and so on.

User output device 924 can include any device via which computing system 914 can provide information to a user. For example, user output device 924 can include a display to display images generated by or delivered to computing system 914. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 924 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 916 can provide various functionality for computing system 914, including any of the functionality described herein as being performed by a server or client, or other functionality associated with message management services.

It will be appreciated that computing system 914 is illustrative and that variations and modifications are possible. Computer systems used in connection with the present disclosure can have other capabilities not specifically described here. Further, while computing system 914 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A device comprising:
a first processor configured to:
generate a first set of packets in a first layer corresponding to content data, the first set of packets associated with an application data unit, each packet of the first set of packets including a flag indicative of an association with the application data unit; and
a second processor configured to:
determine that the first set of packets in the first layer is associated with the application data unit, according to flags of the first set of packets,
generate, using the first set of packets, a second set of one or more packets in a second layer for transmission, in response to determining that the first set of packets is associated with the application data unit, and
schedule transmission of the second set of one or more packets in the second layer within a defined time period.

2. The device of claim 1 or claim 2, wherein the second processor is configured to schedule a time period subsequent to the defined time period to cause a wireless interface of the device to enter a sleep state.

3. The device of any preceding claim, wherein the first set of packets in the first layer includes Internet protocol (IP) packets, and the second set of one or more packets in the second layer includes radio link control (RLC) packets, packet data convergence protocol (PDCP) packets, service data adaption protocol (SDAP) packets, or medium access control (MAC) packets.

4. The device of any preceding claim, wherein a last packet of the first set of packets includes a flag indicating that no additional packet is associated with the application data unit; and optionally, wherein each remaining packet of the first set of packets includes a flag indicating that an additional packet is associated with the application data unit.

5. The device of claim 4, wherein the second processor is configured to hold off on scheduling transmission of the second set of one or more packets, until detecting the flag of the last packet indicating that no additional packet is associated with the application data unit.

6. The device of any preceding claim,
wherein the first processor is configured to:
obtain a third set of packets in the first layer corresponding to another content data, the third set of packets associated with another application data unit, each packet of the third set of packets including a flag indicative of an association with the another application data unit; and
wherein the second processor is configured to:
determine that the third set of packets in the first layer is associated with the another application data unit according to flags of the third set of packets,
generate, using the third set of packets, a fourth set of packets in the second layer for transmission, in response to determining that the third set of packets is associated with the another application data unit, and
schedule transmission of the second set of one or more packets and the fourth set of packets within the defined time period.

7. The device of any preceding claim, wherein the second processor is configured to:
determine a predicted time period to transmit the second set of one or more packets in the second layer,
compare the predicted time period with a threshold of the defined time period, and
schedule transmission of the second set of one or more packets within the defined time period, in response to the predicted time period satisfying the threshold.

8. The device of any one of claims 1 to 6, wherein the second processor is configured to:
determine a predicted time period to transmit the second set of one or more packets in the second layer,
compare the predicted time period with a threshold of the defined time period, and
in response to the predicted time period not satisfying the threshold, extending the defined time period to allow transmission of the one or more packets, or scheduling to transmit the one or more packets during a subsequent time period.

9. A method comprising:
generating, by at least one processor, a first set of packets in a first layer corresponding to content data, the first set of packets associated with an application data unit, each packet of the first set of packets including a flag indicative of an association with the application data unit;
determining, by the at least one processor, that the first set of packets in the first layer is associated with the application data unit, according to flags of the first set of packets;
generating, by the at least one processor using the first set of packets, a second set of one or more packets in a second layer for transmission, in response to determining that the first set of packets is associated with the application data unit; and
scheduling, by the at least one processor, to transmit the second set of one or more packets in the second layer within a defined time period.

10. The method of claim 9, comprising:
scheduling, by the at least one processor, a time period subsequent to the defined time period to cause a wireless interface to enter a sleep state.

11. The method of claim 9 or 10, wherein the first set of packets in the first layer includes Internet protocol (IP) packets, and the second set of one or more packets in the second layer includes radio link control (RLC) packets, packet data convergence protocol (PDCP) packets, service data adaption protocol (SDAP) packets, or medium access control (MAC) packets.

12. The method of any one of claims 9 to 11, wherein a last packet of the first set of packets includes a flag indicating that no additional packet is associated with the application data unit, the method optionally comprising holding off, by the at least one processor, on scheduling transmission of the second set of one or more packets, until detecting the flag of the last packet indicating that no additional packet is associated with the application data unit.

13. The method of one of claims 9 to 12, comprising:
obtaining, by the at least one processor, a third set of packets in the first layer corresponding to another content data, the third set of packets associated with another application data unit, each packet of the third set of packets including a flag indicative of an association with the another application data unit;
determining, by the at least one processor, that the third set of packets in the first layer is associated with the another application data unit according to flags of the third set of packets;
generating, by the at least one processor using the third set of packets, a fourth set of packets in the second layer for transmission, in response to determining that the third set of packets is associated with the another application data unit; and
scheduling, by the at least one processor, to transmit the second set of one or more packets and the fourth set of packets within the defined time period.

14. The method of one of claims 9 to 13, comprising:
determining, by the at least one processor, a predicted time period to transmit the second set of one or more packets in the second layer;
comparing, by the at least one processor, the predicted time period with a threshold of the defined time period; and
scheduling, by the at least one processor, to transmit the second set of one or more packets within the defined time period, in response to the predicted time period satisfying the threshold.

15. A non-transitory computer readable medium storing instructions that, when executed by one or more processors, cause the one or more processors to perform the method of any one of claims 9 to 14.
